(19) Europäisches Patentamt / European Patent Office / Office européen des brevets

(11) **EP 4 056 356 A1**

(12) **EUROPEAN PATENT APPLICATION**

(43) Date of publication:
**14.09.2022 Bulletin 2022/37**

(21) Application number: **22160659.3**

(22) Date of filing: **08.03.2022**

(51) International Patent Classification (IPC):
**B29D 11/00** (2006.01)  **G02C 7/10** (2006.01)
**G02C 7/12** (2006.01)

(52) Cooperative Patent Classification (CPC):
**B29D 11/0073; B29D 11/00009; B29D 11/00528;
G02C 7/10; G02C 7/12**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.03.2021 JP 2021036406**

(71) Applicant: **Hoya Lens Thailand Ltd.
Pathumthani 12130 (TH)**

(72) Inventor: **SANO, Yoshio
Tokyo, 1608347 (JP)**

(74) Representative: **Betten & Resch
Patent- und Rechtsanwälte PartGmbB
Maximiliansplatz 14
80333 München (DE)**

(54) **POLARIZED LENS FOR SPECTACLES, METHOD FOR MANUFACTURING POLARIZED LENS FOR SPECTACLES, METHOD FOR MANUFACTURING FRAMED SPECTACLE, AND METHOD FOR INSPECTING POLARIZED LENS FOR SPECTACLES**

(57) Provided is a technique by which it is possible to reduce the thickness of a polarized lens for spectacles that has a rotationally symmetric aspherical surface formed on an object-side surface thereof, in the same manner as for a normal lens. Provided is a polarized lens for spectacles, including: a first lens substrate (110) having an object-side surface (111) on which a convex surface that is a rotationally symmetric aspherical surface is formed; a second lens substrate (120) having an eyeball-side surface; and a polarized film (130) disposed between the first lens substrate and the second lens substrate and having a convex shape toward the object-side surface, wherein an in-plane distribution of a distance W between the object-side surface of the first lens substrate and the polarized film is concentric with the optical center of the lens and where the distance W is rotational symmetric as well.

**FIG. 1A**

**Description**

BACKGROUND OF THE INVENTION

1. Field of the Invention

The present invention relates to a polarized lens for spectacles, a method for manufacturing a polarized lens for spectacles, a method for manufacturing a framed spectacle, and a method for inspecting a polarized lens for spectacles.

2. Description of Related Art

Conventionally, a polarized lens for spectacles is known that blocks light of a predetermined polarization direction that has been reflected by a water surface or the like. For example, JP 2013-160994A discloses a polarized plastic lens for spectacles in which a polarized film is provided between two lens substrates.
JP 2013-160994A is an example of related art.

SUMMARY OF THE INVENTION

JP 2013-160994A discloses a polarized plastic lens for spectacles that has a spherical surface as a surface on an object side (hereinafter also referred to as an "object-side surface"). On the other hand, an aspherical lens is generally known to be advantageous, for example, from the viewpoint of reducing the thickness of a lens. Despite its small thickness, an aspherical lens can realize a greater reduction in aberration, as compared with a lens formed by a spherical surface. In this respect, an aspherical surface is used as the object-side surface for many lenses. However, in the case of producing a polarized lens for spectacles that has a rotationally symmetric aspherical surface formed on the object-side surface thereof, a polarized film is embedded in the lens. Accordingly, it is difficult to reduce the thickness of the polarized lens, as compared with a normal lens (without a polarization function). That is, since the lens includes the polarized film therein, the advantage of small thickness of the aspherical lens may be compromised.
An object of an embodiment of the present invention is to provide a technique by which it is possible to reduce the thickness of a polarized lens for spectacles that has a rotationally symmetric aspherical surface formed on an object-side surface thereof, in the same manner as for a normal lens.
A first aspect of the present invention is a polarized lens for spectacles, including:

a first lens substrate having an object-side surface on which a convex surface that is a rotationally symmetric aspherical surface is formed;
a second lens substrate having an eyeball-side surface; and
a polarized film provided between the first lens substrate and the second lens substrate and having a convex shape toward the object-side surface,
wherein an in-plane distribution of a distance W between the object-side surface and the polarized film has concentricity.

A second aspect of the present invention is the polarized lens for spectacles according to the first aspect, wherein the distance W on a circumference centered around an optical center of the object-side surface and including a position at which the distance W is minimum is 0.1 mm or more and 0.7 mm or less.
A third aspect of the present invention is the polarized lens for spectacles according to the first or second aspect, wherein a difference between a maximum value and a minimum value of the distance W on a circumference having a radius r (9 mm $\leq$ r $\leq$ 25 mm) from an optical center of the object-side surface is 0.35 mm or less.
A fourth aspect of the present invention is the polarized lens for spectacles according to any one of the first to third aspects, wherein a standard deviation of the distance W at a plurality of points on a circumference having a radius r (9 mm $\leq$ r $\leq$ 25 mm) from an optical center of the object-side surface is 0.15 or less.
A fifth aspect of the present invention is the polarized lens for spectacles according to any one of the first to fourth aspects, wherein the polarized film has a radius of curvature different from that of the object-side surface.
A sixth aspect of the present invention is the polarized lens for spectacles according to any one of the first to fifth aspects, wherein a ratio of radial variation in the distance W is larger than a ratio of circumferential variation in the distance W on a plurality of circumferences having a radius r (9 mm $\leq$ r $\leq$ 25 mm) from an optical center of the object-side surface.

A seventh aspect of the present invention is the polarized lens for spectacles according to any one of the first to sixth aspects,
wherein the convex shape of the polarized film is spherical.

An eighth aspect of the present invention is the polarized lens for spectacles according to any one of the first to sixth aspects,
wherein the convex shape of the polarized film is rotationally symmetric aspherical.

A ninth aspect of the present invention is the polarized lens for spectacles according to any one of the first to eighth aspects,
wherein the first lens substrate and the second lens substrate have a refractive index of 1.48 or more.

A tenth aspect of the present invention is the polarized lens for spectacles according to any one of the first to ninth aspects,
wherein the polarized film includes polyvinyl alcohol.

An eleventh aspect of the present invention is a method for manufacturing a polarized lens for spectacles including:

a first lens substrate having an object-side surface on which a convex surface that is a rotationally symmetric aspherical surface is formed;
a second lens substrate having an eyeball-side surface; and
a polarized film provided between the first lens substrate and the second lens substrate and having a convex shape toward the object-side surface,
the method including steps of:

preparing a first mold for forming the object-side surface, and a second mold for forming the eyeball-side surface;
fixing an outer peripheral portion of the first mold and an outer peripheral portion of the polarized film to each other at a predetermined interval from each other;
assembling the first mold and the second mold to each other to form a matrix; and
forming the lens substrate by injecting a material of a lens substrate into the matrix, and curing the material, wherein an in-plane distribution of a distance W between the polarized film and the object-side surface has concentricity.

A twelfth aspect of the present invention is the method for manufacturing a polarized lens for spectacles according to the eleventh aspect, further including a step of, after the step of forming the lens substrate,
subjecting the eyeball-side surface to polishing.

A thirteenth aspect of the present invention is a method for manufacturing a framed spectacle, including steps of:

preparing a polarized lens for spectacles that is obtained by the manufacturing method according to the twelfth aspect; and
preparing a predetermined spectacle frame.

A fourteenth aspect of the present invention is a method for inspecting a polarized lens for spectacles including:

a first lens substrate having an object-side surface on which a convex surface that is a rotationally symmetric aspherical surface is formed;
a second lens substrate having an eyeball-side surface; and
a polarized film provided between the first lens substrate and the second lens substrate and having a convex shape toward the object-side surface,
the method including
measuring a distance W between the object-side surface and the polarized film; and
evaluating the polarized lens for spectacles from an in-plane distribution of the distance W.

According to an embodiment of the present invention, it is possible to reduce the thickness of a polarized lens for spectacles that has a rotationally symmetric aspherical surface formed on an object-side surface thereof, in the same manner as for a normal lens.

BRIEF DESCRIPTION OF THE DRAWINGS

FIG. 1A is a cross-sectional view showing an exemplary configuration of a polarized lens 100 for spectacles according to a first embodiment.

FIG. 1B is a cross-sectional view showing another exemplary configuration of the polarized lens 100 for spectacles according to the first embodiment.

FIG. 1C is a cross-sectional view showing another exemplary configuration of the polarized lens 100 for spectacles according to the first embodiment.

FIG. 1D is a cross-sectional view showing another exemplary configuration of the polarized lens 100 for spectacles according to the first embodiment.

FIG. 2 is a flowchart showing an exemplary method for manufacturing the polarized lens 100 for spectacles according to the first embodiment.

FIG. 3 is a cross-sectional view showing an exemplary assembly mode of a second mold 150 and a first mold 140 according to the first embodiment.

FIG. 4 is a plan view of a lens 100 showing positions of measurement points in examples.

FIG. 5 shows radar charts showing distances W of the measurement points in the examples.

DETAILED DESCRIPTION OF THE INVENTION

<Findings Obtained by the Inventors>

First, the findings obtained by the inventors will be described. When obtaining a spectacle lens having a predetermined prescription power, minimizing the thickness of the lens is advantageous in terms of both the appearance and the weight reduction, and is therefore desired by many users. Here, in order to reduce the thickness of a type of polarized lens including a polarized film embedded in a substrate thereof, controlling the position of the polarized film disposed in the lens substrate is a major challenge. The reason being that the polarized film needs to be embedded in an appropriate depth without being exposed on the lens surface. For example, the following considerations need to be made for the manufacture of a semi-finished lens. A semi-finished lens has an optical surface with a predetermined shape as an object-side surface thereof, and is used to form a finished lens by an eyeball-side surface (hereinafter also referred to as an "eyeball-side surface") thereof being polished at a later time. Such a semi-finished lens can be processed to have a sufficiently small thickness by polishing the semi-finished lens from the eyeball side, if the polarized film is disposed in a proper orientation at a minimum required separation distance from the object-side surface. On the other hand, if the polarized film is separated from the object-side surface more than necessary, or is displaced and inclined relative to the central axis of the object-side surface, it is inevitable that the eyeball side is processed shallowly, which makes it difficult to reduce the lens thickness. Also, it is more difficult to control the placement position of the polarized film for a lens having an aspherical surface on the object-side surface thereof than for a lens having a spherical surface. The reason for this will be described below.

If the object-side surface is a spherical surface, and the polarized film has a spherical surface, there is no need to take any special measures to make the rotation axis directions of the object-side surface and the polarized film to coincide with each other when manufacturing a polarized lens for spectacles, because a spherical surface has infinite numbers of rotation axes. Therefore, it is relatively easy to align the positions of the object-side surface and the polarized film, and control a distance W therebetween.

On the other hand, if the object-side surface is a rotationally symmetric aspherical surface, it is more difficult to make the rotation axes of the object-side surface and the polarized film to coincide with each other. If the rotation axes respectively passing through the centers of the object-side surface and the polarized film are not coincide with each other, the object-side surface and the polarized film are inclined relative to each other when the polarized film is disposed in the lens substrate, resulting in variations in the distance W between the object-side surface and the polarized film. Even if a region in which the distance W is 0 mm is formed, or in other words, a region in which the polarized film is not exposed is formed, there is the possibility that the polarized film cannot retain its shape as a result of absorbing moisture. When a region in which the distance W is greater than 0 mm and less than 0.1 mm is formed, the shape of a mold is not transferred normally when a monomer serving as the lens substrate is cured. Accordingly, a partial deformation may occur (hereinafter this phenomenon is also referred to as "waviness"). Therefore, in the case of producing a polarized lens for spectacles that has a rotationally symmetric aspherical surface formed on an object-side surface thereof, the distance W needs to be controlled so as to be relatively large, taking variations in the distance W into account. This makes it difficult to reduce the lens thickness.

When the polarized film having the shape of a spherical surface is embedded in a lens whose object-side surface is a spherical surface, the position at which the object-side surface and the polarized film are in the closest proximity to each other is substantially constant (e.g., the lens center in the case of a plus prescription lens, and the vicinity of an outer edge in the case of a minus prescription lens). Accordingly, the polarized film can be prevented from being exposed by controlling the distance W for the position. However, this does not necessarily apply to a lens whose object-side surface is an aspherical surface, and therefore, a special consideration is needed for the accuracy of placement of the polarized film at a minimum position, which will be described later.

The present inventors conducted intensive studies to address the above-described problem. As a result, the inventors have found that, by controlling the concentricity of the in-plane distribution of the distance W, it is also possible to reduce the lens thickness for a polarized lens for spectacles that has a rotationally symmetric aspherical surface formed on an object-side surface thereof. In this case, it can be said that the in-plane distribution of the distance W is concentric with respect to the above-described lens optical center (corresponding to the lens apex) of the above-described lens serving as the center. As a result, it is possible to provide a thin polarized lens desired by the user, without compromising the advantage of an aspherical lens with a reduced thickness. Note that the foregoing description applies to both a case where the shape of the polarized film is spherical, and a case where the shape of the polarized film is rotationally symmetric aspherical.

[Details of Embodiments of the Present Invention]

Next, embodiments of the present invention will be described below with reference to the drawings. It should be noted that the present invention is defined by the claims, rather than being limited to these illustrative embodiments, and is intended to include all modifications which fall within the scope of the claims and the meaning and scope of equivalent thereof.

<First Embodiment of the Present Invention>

(1) Configuration of Polarized Lens 100 for Spectacles

First, a configuration of a polarized lens 100 (hereinafter also simply referred to as a "lens 100") for spectacles according to the present embodiment will be described. Note that the lens 100 of the present embodiment has, on an object-side surface thereof, an optical surface that has been formed based on a predetermined design. The lens 100 includes, not only a so-called finished lens, which has a predetermined optical surface also on an eyeball-side surface thereof, but also a semi-finished lens, which can provide a finished lens by polishing an eyeball-side surface thereof according to a prescription, for example. The lens 100 may be a single focus lens, or a progressive power lens having a progressive refractive surface on an eyeball-side surface thereof.

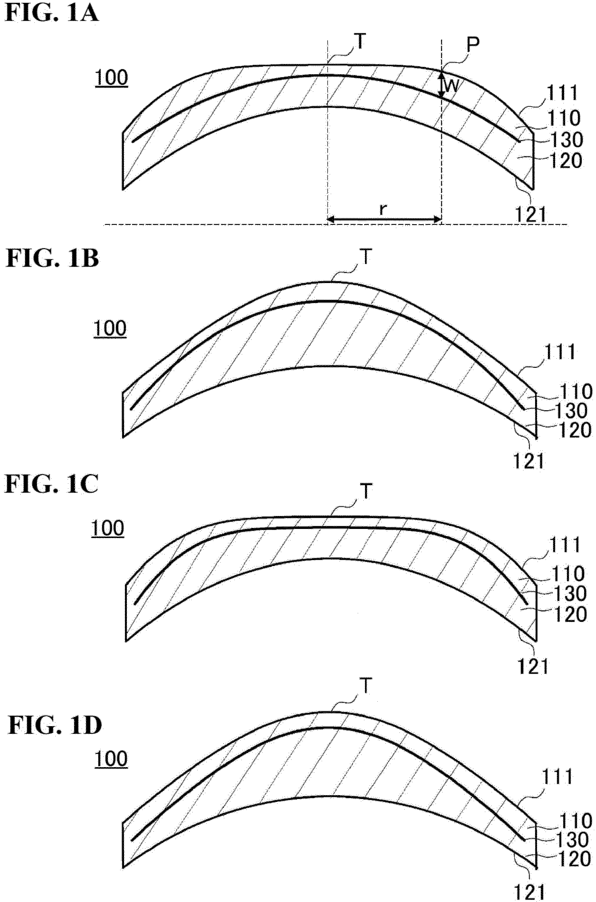

FIG. 1A is a cross-sectional view showing an exemplary configuration of the polarized lens 100 for spectacles according to the present embodiment. As shown in FIG. 1A, the lens 100 includes, for example, a first lens substrate 110, a second lens substrate 120, and a polarized film 130. The first lens substrate 110 is provided on a front surface side (object side) of the lens 100, and the second lens substrate 120 is provided on a back surface side (eyeball side) thereof. The polarized film 130 is provided between the first lens substrate 110 and the second lens substrate 120.

The first lens substrate 110 has, on a surface opposite to a surface facing the polarized film 130, an object-side surface (object-side surface 111) on which a convex surface that is a rotationally symmetric aspherical surface is formed. The second lens substrate 120 has an eyeball-side surface (eyeball-side surface 121) on a surface opposite to a surface facing the polarized film 130. The polarized film 130 has a convex shape toward the object-side surface 111. The convex shape of the polarized film 130 may be spherical as shown in FIGS. 1A and 1B, or may be rotationally symmetric aspherical as shown in FIGS. 1C and 1D.

In the lens 100, the eyeball-side surface 121 of the second lens substrate 120 may be an optical surface designed based on a predetermined prescription. When the lens 100 is a semi-finished lens, the eyeball-side surface 121 of the second lens substrate 120 may have a provisional shape that is to be polished according to a prescription when producing a finished lens.

Preferably, the first lens substrate 110 and the second lens substrate 120 are made of transparent plastic having a refractive index of 1.48 or more. More preferably, the refractive index is 1.60 or more. In this case, it is possible to realize a more significant reduction in the lens thickness. Examples of the materials of the first lens substrate 110 and the second lens substrate 120 include acrylic resin, thiourethane resin, methacrylic resin, aryl resin, episulfide resin, and polycarbonate resin. Among these, thiourethane resin and thioepoxy resin, which have a relatively high refractive index, are preferable from the viewpoint of reducing the lens thickness. Note that the first lens substrate 110 and the second lens substrate 120 are preferably made of the same material. When the lens 100 is a semi-finished lens, the first lens substrate 110 and the second lens substrate 120 may be connected to each other in the vicinity of an outer edge of the lens.

As the polarized film 130, it is possible to use a polarized film obtained, for example, by subjecting a commercially available iodine polarized film to curved surface processing through press molding, vacuum molding or the like so as to have a predetermined curvature, and cutting the polarized film into a circular shape. The thickness of the polarized film 130 is preferably 10 $\mu$m or more and 500 $\mu$m or less, for example. When the thickness of the polarized film 130 is less than 10 µm, the polarized film 130 has a low rigidity, and thus may be difficult to handle. On the other hand, when the thickness of the polarized film 130 exceeds 500 µm, it may be difficult to obtain a predetermined curvature when subjecting the polarized film 130 to curved surface processing.

The polarized film 130 is preferably a single-layer or multilayer film including polyvinyl alcohol (PVA), for example. PVA is a material excellent in transparency, heat-resistance, affinity with iodine serving as a stain or a dichroic dye, and orientation in stretching. A multilayer polarized film 130 can be obtained, for example, by molding PVA impregnated with iodine into a film shape, uniaxially stretching the resulting molded article to form a resin layer, and subsequently laminating triacetylcellulose (TAC) on both surfaces of the resin layer as a protection layer. As a single-layer polarized film 130, it is also possible to use, for example, a film produced using PVA without any protection layer laminated thereon, or polyethylene terephthalate (PET).

Since the object-side surface 111 is an aspherical surface, a position (hereinafter also referred to as a "minimum position") at which the distance W between the object-side surface 111 and the polarized film 130 is minimum differs depending on the type of the lens 100 and the shape of the polarized film 130. Furthermore, the minimum position is not limited to one point. For example, an optical center T of the object-side surface 111 is the minimum position for the lenses 100 (minus prescription lenses) shown in FIGS. 1A and 1C, whereas the minimum position is present between the optical center T of the object-side surface 111 and an outer peripheral portion for the lenses 100 (plus prescription lenses) shown in FIGS. 1B and 1D. Note that the distance W as used in the present specification refers to the distance between the object-side surface 111 and the polarized film 130, assuming the normal (a perpendicular to a tangent plane) to the object-side surface 111 at a measurement point P, as shown in FIG. 1A.

The distance W on a circumference centered around the optical center T of the object-side surface 111 and including the minimum position is preferably 0.1 mm or more and 0.7 mm or less. That is, the distance W is preferably 0.1 mm or more and 0.7 mm or less at any position on the above-described circumference. When the distance W on the above-described circumference is less than 0.1 mm, the problem of waviness described above may occur. On the other hand, when the distance W on the above-described circumference exceeds 0.7 mm, it may be difficult to reduce the thickness of the lens 100. In contrast, setting the distance W on the above-described circumference to 0.7 mm or less makes it easier to reduce the thickness of the lens 100. The distance W on the above-described circumference is more preferably 0.2 mm or more and 0.7 mm or less, and further preferably 0.2 mm or more and 0.6 mm or less. Note that in the case of a lens 100 (minus prescription lens) for which the optical center T is the minimum position, the expression "on a circumference ... including the minimum position" may be read as "at the minimum position". As used in the present specification, in the expression "having a radius from the optical center T of the object-side surface 111", the radius r refers to a size on a projection plane when the lens 100 is placed on a plane perpendicular to the optical axis, as shown in FIG. 1A. When $r_m$ is the radius of a circle on a "circumference ... including the minimum position", $r_m$ may have a value in the range of 20 mm or more and 30 mm or less for a plus prescription lens, for example. On the other hand, for a minus prescription lens, for example, $r_m$ may have a value in the range of 0 mm or more and 9 mm or less.

The in-plane distribution of the distance W in the lens 100 has concentricity. By controlling the concentricity of the in-plane distribution of the distance W, it is possible to reduce the thickness of the lens 100 whose object-side surface 111 is a rotationally symmetric aspherical surface, in the same manner as for a normal lens. Note that in the present embodiment, the in-plane distribution of the distance W is determined to have concentricity if at least one of conditions 1 and 2, which will be described later, is satisfied.

(Condition 1)

A difference Wd between a maximum value and a minimum value of the distance W on a circumference having a radius r (9 mm≤r≤25 mm) from the optical center T of the object-side surface 111 is preferably 0.35 mm or less, more preferably 0.30 mm or less, and further preferably 0.25 mm or less. In the present embodiment, the lens 100 is determined to satisfy the condition 1 if the difference Wd is 0.35 mm or less. Note that the lens 100 may be determined to satisfy the condition 1 if the difference Wd is 0.30 mm or less (or 0.25 mm or less). To obtain a maximum value and a minimum value of the distance W, the distance W may be measured at a plurality of points (hereinafter also referred to as "measurement points") on a circumference having a radius r from the optical center T, for example.

For determination based on the condition 1, it is preferable to set a plurality of measurement points on the above-described circumference such that rotation angles are uniform. For example, in the case of setting four measurement points, it is preferable to set the measurement points such that the rotation angle of measurement point 1 is 0 degrees, and the rotation angles of measurement points 2, 3, and 4 are 90 degrees, 180 degrees, and 270 degrees, respectively. The number of measurement points on the above-described circumference is preferably 4 or more, more preferably 8 or more, and further preferably 12 or more. Note that the upper limit of the number of measurement points on the above-described is not particularly limited.

For determination based on the condition 1, whether or not the lens 100 satisfies the condition 1 may be determined by measuring the distance W on a plurality of circumferences having different radii r from the optical center T. In this case, any value that satisfies the condition: 9 mm $\leq$ r $\leq$ 25 mm can be selected as the value of the radius r. For example, the value of r may be one of 9, 17, and 25 (mm). The lens 100 may be determined to satisfy the condition 1 if the difference Wd is 0.35 mm or less on all of the plurality of circumferences. More preferably, this is satisfied for any radius r that satisfies the condition: 9 mm $\leq$ r $\leq$ 25 mm. When selecting the above-described measurement points, the measurement points are set at substantially equal intervals in the diameter direction of the lens relative to a reference point of 17 mm in accordance with the ISO standards, while taking into consideration that substantially the entire region of the lens attached to a spectacle frame is covered at r $\leq$ 25 mm.

As will be described in examples described below, if the difference Wd on the above-described circumference is 0.35 mm or less (i.e., the lens 100 satisfies the condition 1), the lens 100 can achieve a thinness equivalent to that of a normal lens (lens without a polarization function). Studies carried out inventors have revealed that this can provide such an advantage of being able to control the minimum value of the edge thickness (thickness of an outer peripheral portion of the lens 100) of a plus prescription lens, for example, to about 1 mm (e.g., 1.0 $\pm$ 0.2 mm). When the minimum value of the edge thickness is less than 1 mm, the strength of the lens 100 may be reduced. When the minimum value of the edge thickness exceeds 1 mm, the thickness reduction for the lens 100 is reduced by the exceeding amount. Specifically, the minimum value of the edge thickness is preferably 1 mm or more and 1.2 mm or less.

(Condition 2)

A standard deviation $\sigma$ of the distance W at a plurality of measurement points on a circumference having a radius r (9 mm $\leq$ r $\leq$ 25 mm) from the optical center T of the object-side surface 111 is preferably 0.15 or less. The lens 100 is determined to satisfy the condition 2 if the standard deviation $\sigma$ of the distance W at a plurality of measurement points on the above-described circumference is 0.15 or less. Preferably, the plurality of measurement points are determined such that rotation angles are uniform, as in the case of the condition 1. As in the case of the condition 1, whether or not the lens 100 satisfies the condition 2 may be determined by measuring the distance W at a plurality of circumferences having different radii r from the optical center T. In this case, as in the case of condition 1, the lens 100 may be determined to satisfy the condition 2 if the standard deviation $\sigma$ of the distance W is 0.15 or less, for example, on a circumference having any radius r among the plurality of circumferences.

From the viewpoint of reducing the lens thickness, it is not desirable that local deformation (a concave portion or a convex portion) is produced in any portion of the polarized film 130, because the polarized film 130 is more likely to be exposed when polishing the eyeball-side surface 121, for example. Studies carried out by the inventors have revealed that such a problem can be avoided if the standard deviation $\sigma$ of the distance W on a plurality of points of the above-described circumference is 0.15 or less (i.e., if the lens 100 satisfies the condition 2).

The polarized film 130 may have a radius of curvature different from that of the object-side surface 111. Note that as used in the present specification, a radius of curvature means an approximate radius of curvature if the lens or the polarized film has the shape of an aspherical surface. For a lens or polarized film having the shape of an aspherical surface, the approximate radius of curvature can be calculated from relative positions between an apex (optical center) and an outer edge thereof. When C is the diameter of a circle constituting an outer edge, and h is the sag value, the approximate radius of curvature R can be represented by the following expression:

$$R = \{h^2 + (C/2)^2\}/2h$$

When the distance W is measured on a plurality of circumferences having a radius r (9 mm $\leq$ r $\leq$ 25 mm) from the optical center T of the object-side surface 111, the ratio of radial variation in the distance W may be larger than the ratio of circumferential variation in the distance W. Since the concentricity of the in-plane distribution of the distance W is controlled in the lens 100 of the present embodiment, the ratio of circumferential variation of the distance W is small. On the other hand, when the polarized film 130 has a radius of curvature different from that of the object-side surface 111 as described above, the ratio of radial variation in the distance W may be larger than the ratio of circumferential variation in the distance W. Specifically, although the amount of circumferential variation in the distance W is preferably 0.35 mm or less as described above, the amount of radial variation in the distance W may be greater than 0.35 mm, for example, on a circle having a radius r1 = 9 mm and a circle having a radius r2 = 25 mm. In this case as well, if the concentricity of the distance W is controlled, the thickness of the lens 100 can be reduced through the control.

In the present embodiment, the shape of the object-side surface 11 1 and the shape of the polarized film 130 need not be completely the same. This provides a degree of freedom in combining a polarized film 130 having a spherical surface with a lens 100 having an aspherical object-side surface 111, or combining a lens 100 and a polarized film 130 having shapes or curvatures that are not necessarily the same. The radius of curvature (or approximate radius of curvature) Rf of the polarized film 130 preferably satisfies Rl $\geq$ Rf, with respect to an approximate radius of curvature Rl of the object-side surface 111.

As described above, the convex shape of the polarized film 130 may be spherical, or rotationally symmetric aspherical. When the convex shape of the polarized film 130 is spherical, the tolerance of the distance W can be designed relatively moderately, which is excellent in versatility as compared with the case of a rotationally symmetric aspherical surface. On the other hand, when the convex shape of the polarized film 130 is rotationally symmetric aspherical, the problem of displacement of the rotation axes of the object-side surface 111 and the polarized film 130 is more likely to occur, as compared with the case of a spherical surface. However, if the concentricity of the distance W is controlled, the effect of reducing the thickness can be achieved through the control, as described above.

(2) Method for Manufacturing Polarized Lens 100 for Spectacles

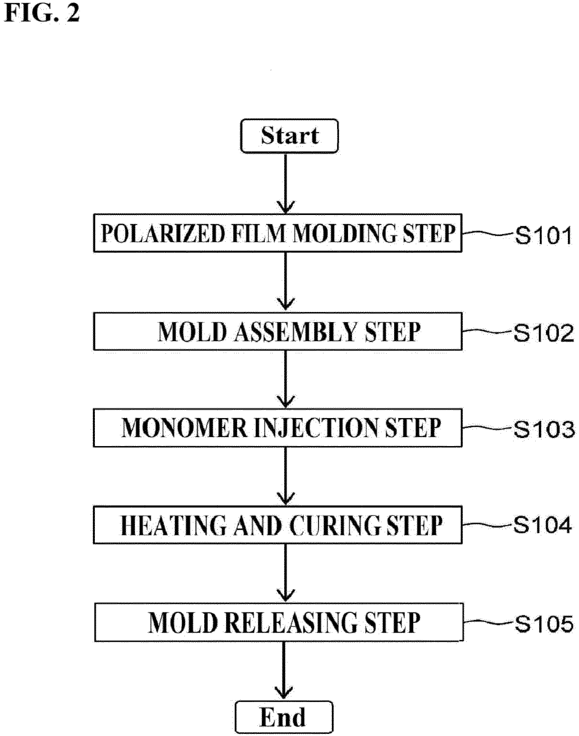

Next, a method for manufacturing the lens 100 according to the present embodiment will be described. FIG. 2 is a flowchart showing an exemplary method for manufacturing the polarized lens 100 for spectacles according to the present embodiment. As shown in FIG. 2, the method for manufacturing the lens 100 according to the present embodiment include, for example, a polarized film molding step S101, a mold assembly step S102, a monomer injection step S103, a heating and curing step S104, and a mold releasing step S105.

(Polarized Film Molding Step S101)

In the polarized film molding step S101, first, a PVA film is pressed by well-known pressing means, to form a convex shape that is spherical or rotationally symmetric aspherical. Next, the formed convex shape is cut around the periphery thereof so as to have a circular shape, whereby a polarized film 130 is obtained.

The outer diameter of the polarized film 130 is preferably smaller than the inner diameters of a first mold 140 and a second mold 150, which will be described later. This allows a monomer to easily flow around the polarized film 130 at the time of injecting the monomer in the monomer injection step S103, thus making it possible to smoothly inject the monomer. Accordingly, the first lens substrate 110 and the second lens substrate 120 may be connected to each other in the vicinity of the periphery of the molds.

(Mold Assembly Step S102)

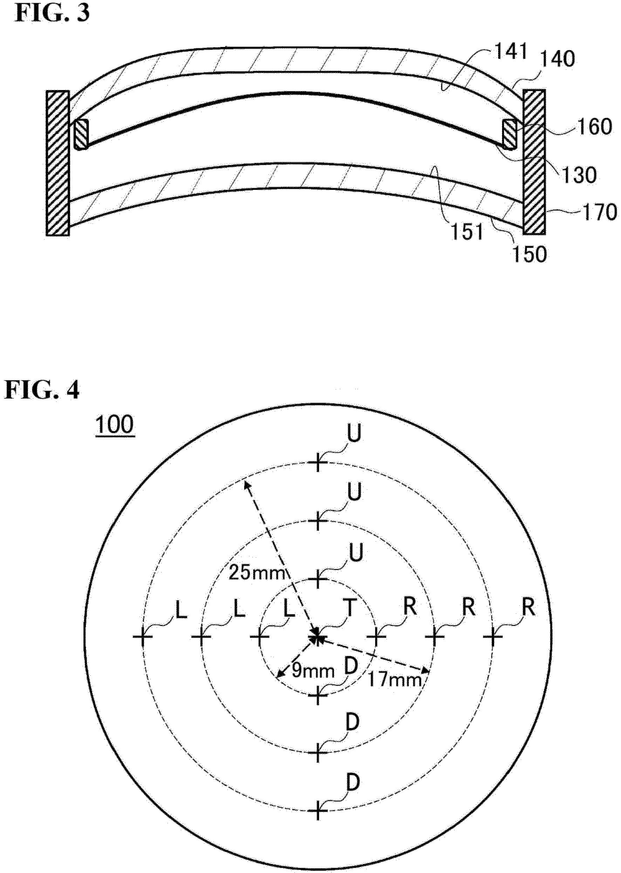

In the mold assembly step S102, first, a first mold 140 and a second mold 150 are prepared. FIG. 3 is a cross-sectional view showing an exemplary assembly mode of the first mold 140 and the second mold 150. The first mold 140 is a mold for forming the object-side surface 111. A back surface 141 of the first mold 140 constitutes a concave surface for forming the object-side surface 111. The second mold 150 is a mold for forming the eyeball-side surface 121. A front surface 151 of the second mold 150 constitutes a curved surface for forming the eyeball-side surface 121. As the materials of the first mold 140 and the second mold 150, it is possible to use a material having a property of transmitting ultraviolet light (e.g., glass). Here, the first mold 140 forms a lens optical surface (convex surface) based on a predetermined prescription. The second mold 150 may form an optical surface (concave surface) based on a predetermined prescription, or may have a provisional concave surface for providing a semi-finished lens.

In the mold assembly step S102, first, an adhesive 160 is applied to the back surface 141 of the first mold 140. The adhesive 160 is applied to a plurality of locations of an outer peripheral portion of the back surface 141 of the first mold 140. As the adhesive 160, it is possible to use an ultraviolet curable resin, for example. When applying the adhesive 160, for example, the first mold 140 may be placed on a turntable, and the turntable is rotated circumferentially. Then, the adhesive 160 may be discharged at a predetermined discharge amount from a needle disposed at a position of back surface 141 that corresponds to the outer peripheral portion. Preferably, the adhesive 160 is formed at the same height for each position to which the adhesive 160 is to be applied. The height of the adhesive 160 may be adjusted according to the interval between the first mold 140 and the polarized film 130.

As shown in FIG. 3, the adhesive 160 is columnar, for example, and has the function of bonding the first mold 140 and the polarized film 130 to each other, and the function of a spacer for maintaining the interval between the first mold 140 and the polarized film 130. For example, the adhesive 160 is preferably applied to the outer peripheral portion of the back surface 141 of the first mold 140 at 12 or more locations at equal intervals. This makes it possible to reduce the displacement of the rotation axes of the object-side surface 111 and the polarized film 130 when solidifying the adhesive 160.

After measuring the central height of the first mold 140, and applying the adhesive 160 to the back surface 141, the first mold 140 is moved to a predetermined position, with the back surface 141 of the first mold 140 facing down.

With the polarized film 130 placed on a holder, the central height of the polarized film 130 is measured. Thereafter, while the polarized film 130 is kept sucked onto the holder, the polarized film 130 is moved to a predetermined position.

After confirming that the rotation axis of the polarized film 130 has not been displaced, the first mold 140 and the polarized film 130 are brought close to each other at a predetermined interval, based on the central heights of the first mold 140 and the polarized film 130, thus bringing the adhesive 160 into contact with the outer peripheral portion of the polarized film 130.

Then, the adhesive 160 is solidified by being irradiated with ultraviolet light, for example, at 500 mW for about 15 seconds, using an ultraviolet irradiation device. Thus, the outer peripheral portion of the polarized film 130 and the outer peripheral portion of the first mold 140 are fixed to each other at a predetermined interval from each other. In the present embodiment, contraction or expansion of the monomer is negligible in a heating and curing step S104, which will be described later. Therefore, the distance W between the object-side surface 111 and the polarized film 130 can be regarded as being equal to the interval between the back surface 141 of the first mold 140 and the polarized film 130.

After solidifying the adhesive 160, the second mold 150 is moved to a predetermined position with the front surface 151 of the second mold 150 facing up, thus disposing the first mold 140 and the second mold 150 so as to sandwich the polarized film 130 therebetween.

After moving the second mold 150 to the predetermined position so as to dispose the first mold 140 and the second mold 150 at a predetermined separation distance, adhesive tape 170 is wrapped around side surfaces of the first mold 140 and the second mold 150 so as to fix the first mold 140 and the second mold 150 to each other. Thus, the first mold 140 and the second mold 150 are assembled to each other, and a cavity for injecting the material of a lens substrate is formed between the two molds. The first mold 140 and the second mold 150 that are fixed to each other with the adhesive tape 170 are also referred to as a matrix. Preferably, the adhesive tape 170 is wrapped one or more turns. For example, polyethylene terephthalate or the like can be used as the substrate of the adhesive tape 170, and a silicone-based adhesive agent and the like, for example, can be used in combination as an adhesive agent. In addition, an injection hole (not shown) for injecting the monomer may be formed in the adhesive tape 170.

In the method for manufacturing the lens 100 in the present embodiment, in particular, in the mold assembly step S102, there are many factors contributing to displacement of the rotation axes of the object-side surface 11 1 and the polarized film 130. Examples of such factors include: (a) a change in the position of the polarized film 130 at the time of solidifying the adhesive 160; (b) the accuracy in positioning the first mold 140; (c) a change in the position of the polarized film 130 at the time of moving the polarized film 130; (d) the accuracy in positioning the polarized film 130; and (e) a change in the position of the polarized film 130 at the time of bringing the adhesive 160 into contact with the polarized film 130. In the present embodiment, the displacement of the rotation axes of the object-side surface 111 and the polarized film 130 is reduced, and therefore the rotation axes of the object-side surface 111 and the polarized film 130 can be made to accurately coincide with each other. As a result, it is possible to control the concentricity of the in-plane distribution of the distance W.

(Monomer Injection Step S103)

In the monomer injection step S103, a monomer serving as the polymer material of the lens substrate is injected into the matrix through the injection hole using a monomer injector. When injecting the monomer, it is preferable that the matrix is filled with the monomer such that no bubbles are left in the matrix.

(Heating and Curing Step S104)

In the heating and curing step S104, the monomer is cured by placing the matrix filled with the monomer in a heating furnace, and heating the matrix. The heating temperature is preferably 0 degrees or more and 150 degrees or less, for example. The heating time is preferably 5 hours or more and 50 hours or less, for example. Through heating, a monomer cured product containing the polarized film 130 is molded in the matrix.

(Mold Releasing Step S105)

In the mold releasing step S105, the matrix is taken out from the heating furnace, the adhesive tape 170 is peeled off, and the first mold 140 and the second mold 150 are separated from the monomer cured product, thus obtaining a lens 100 (semi-finished lens).

After the mold releasing step S105, the eyeball-side surface 121 of the lens 100 may be subjected to polishing, thus obtaining a lens 100 in the form of a finished lens. A film such as a well-known primer film, hard coating film, or antireflection film may be formed on the lens 100. After the lens 100 in the form of a finished lens has been obtained, a predetermined spectacle frame may be prepared, and the lens 100 and the spectacle frame may be assembled to each other, thus manufacturing a framed spectacle.

Through the above-described steps, it is possible to manufacture a lens 100 in which the concentricity of the in-plane distribution of the distance W between the object-side surface 111 and the polarized film 130 is controlled. In the present embodiment, variations in the distance W is reduced by controlling the concentricity of the in-plane distribution of the distance W. Accordingly, the reference value of the distance W at the minimum position can be designed to be small (e.g., 0.5 mm or less). As a result, it is possible to reduce the thickness of the lens 100 that has a rotationally symmetric aspherical surface formed on the object-side surface 111, in the same manner as for a normal lens.

(3) Method for Inspecting Polarized Lens 100 for Spectacles

Next, a method for inspecting the lens 100 according to the present embodiment will be described. In the method for inspecting the lens 100 according to the present embodiment, the distance W between the object-side surface 111 and the polarized film 130 is measured, and the lens 100 is evaluated from the in-plane distribution of the distance W. A specific example of the inspection method will be described below.

For example, the lens 100 may be evaluated as a non-defective product if the distance W is in the range of 0.1 mm or more and 0.7 mm or less at any position on a circumference centered around the optical center T of the object-side surface 111 and including the minimum position.

For example, the lens 100 may be evaluated as a non-defective product if the difference Wd between a maximum value and a minimum value of the distance W on a circumference having a radius r (9 mm $\leq r \leq 25$ mm) from the optical center T of the object-side surface 111 is 0.35 mm or less (preferably 0.30 mm or less, and more preferably 0.25 mm or less).

For example, the lens 100 may be evaluated as a non-defective product if the standard deviation $\sigma$ of the distance W at a plurality of measurement points on a circumference having a radius r (9 mm $\leq r \leq 25$ mm) from the optical center T of the object-side surface 111 is 0.15 or less.

<Other Embodiments of the Present Invention>

Although an embodiment of the present invention has been specifically described above, the present invention is not limited to the above-described embodiment, and various modification can be made without departing from the gist thereof.

For example, in the above-described embodiment, a case is described where the in-plane distribution of the distance W is determined to have concentricity if at least one of the condition 1 and the condition 2 is satisfied. However, the in-plane distribution of the distance W may be determined to have concentricity if both the condition 1 and the condition 2 are satisfied.

For example, in the above-described embodiment, a case is described where an ultraviolet curable resin is used as the adhesive 160. However, a thermosetting resin may be used as the adhesive 160.

For example, in the embodiment, a case is described where the adhesive 160 is applied to the outer peripheral portion of the back surface 141 of the first mold 140. However, the adhesive 160 may be applied to the outer peripheral portion of the polarized film 130.

[Examples]

Next, examples according to the present invention will be described. These examples are merely examples of the present invention, and the present invention is not limited to these examples.

(1) Production of Polarized Lens for Spectacles

First, Samples 1 and 2 as polarized lenses 100 for spectacles (semi-finished lenses) were produced in the following manner.

Sample 1 was produced by the manufacturing method described in the first embodiment. Thiourethane resin having a refractive index of 1.67 was used as the first lens substrate 110 and the second lens substrate 120. A polarized film whose convex shape is aspherical was used as the polarized film 130.

Sample 2 was produced by the manufacturing method described in the first embodiment. Thiourethane resin having a refractive index of 1.67 was used as the first lens substrate 110 and the second lens substrate 120. A polarized film whose convex shape is spherical was used as the polarized film 130.

Polarized lenses (semi-finished lenses) for spectacles for comparison were prepared, and were used as Reference Examples 1 to 3. Polarized films whose convex shape is spherical were used as the polarized films 130 of Reference Examples 1 and 2. A polarized film whose convex shape is aspherical was used as the polarized film 130 of Reference Example 3.

Note that Samples 1, 2 and Reference Examples 1 to 3 are plus prescription lenses, and a position at 25 mm from the optical center T of the object-side surface 111 is the minimum position.

(2) Measurement of Distance W

For Samples 1, 2 and Reference Examples 1 to 3, the distance W between the object-side surface 111 of each lens and the polarized film 130 was measured. Specifically, using a non-contact sensor (a compact, ultra-high accuracy sensor head: wide spot LK-G15, manufactured by KEYENCE CORPORATION), and a displacement meter (a CCD transmissive digital laser sensor LK-G3000A, manufactured by KEYENCE CORPORATION) in combination, the distances W at measurement points 1 to 13 were measured over an area of $20 \times 500$ $\mu$m. FIG. 4 is a plan view of the lens 100 showing positions of the measurement points.

Measurement point 1: optical center T
Measurement points 2 to 5: four points (rotation angles of 0 degrees, 90 degrees, 180 degrees, and 270 degrees) on a circumference having a radius of 9 mm from the optical center T
Measurement points 6 to 9: four points (rotation angles of 0 degrees, 90 degrees, 180 degrees, and 270 degrees) on a circumference having a radius of 17 mm from the optical center T
Measurement points 10 to 13: four points (rotation angle of 0 degrees, 90 degrees, 180 degrees, and 270 degrees) on a circumference having a radius of 25 mm from the optical center T

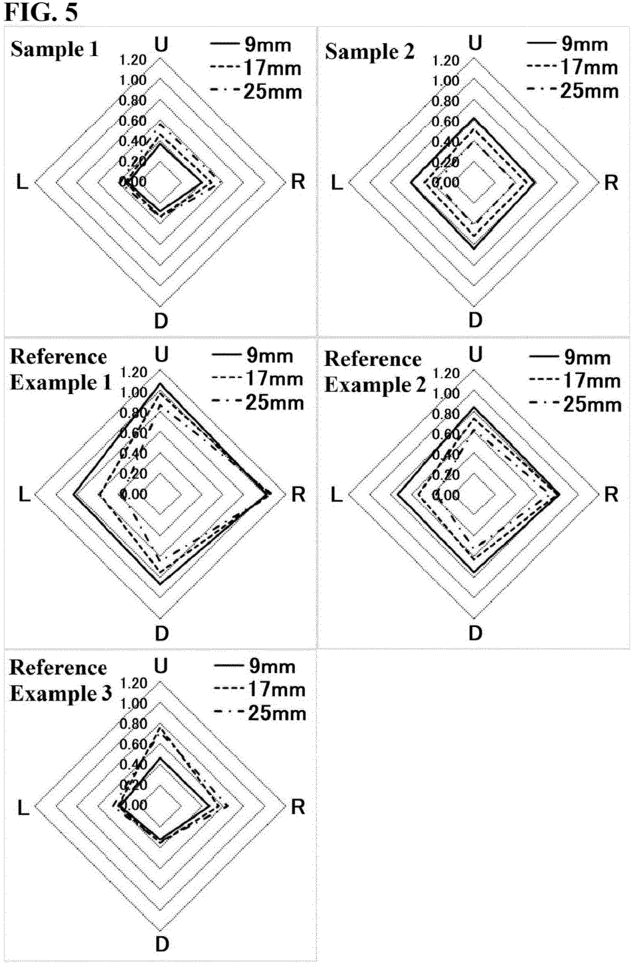

In FIG. 4, U denotes the measurement point at a rotation angle of 0 degrees, R denotes the measurement point at a rotation angle of 90 degrees, D denotes the measurement point at a rotation angle of 180 degrees, and L denotes measurement point at a rotation angle of 270 degrees.
From the measured distances W, the difference Wd between a maximum value and a minimum value of the distance W, and the standard deviation $\sigma$ of the distance W on each of the above-described circumferences were calculated. The results are shown in Table 1. Note that in the present examples, the standard deviation $\sigma$ of each distance W was calculated using The STDEV.S function of EXCEL. FIG. 5 shows the distances W at the measurement points in radar charts. In the radar charts shown in FIG. 5, the four measurement points on the same circumference are connected to form a quadrilateral. It can be said that the more similar the quadrilateral is to a square, the likelier the in-plane distribution of the distance W has concentricity (or has high concentricity).

[Table 1]

| Sample 1 | | | | | | |
|---|---|---|---|---|---|---|
| | U | R | D | L | Wd | $\sigma$ |
| T | 0.36 | | | | - | - |
| 9 mm | 0.37 | 0.40 | 0.28 | 0.31 | 0.12 | 0.055 |
| 17 mm | 0.46 | 0.49 | 0.33 | 0.33 | 0.16 | 0.085 |
| 25 mm | 0.56 | 0.58 | 0.34 | 0.38 | 0.24 | 0.123 |
| Sample 2 | | | | | | |
| | U | R | D | L | Wd | $\sigma$ |
| T | 0.67 | | | | | |
| 9 mm | 0.62 | 0.58 | 0.64 | 0.61 | 0.06 | 0.025 |
| 17 mm | 0.51 | 0.50 | 0.52 | 0.47 | 0.05 | 0.022 |
| 25 mm | 0.40 | 0.39 | 0.42 | 0.36 | 0.06 | 0.025 |
| Reference Example 1 | | | | | | |
| | U | R | D | L | Wd | $\sigma$ |
| T | 1.00 | | | | - | - |
| 9 mm | 1.06 | 1.02 | 0.87 | 0.83 | 0.23 | 0.112 |
| 17 mm | 0.97 | 1.05 | 0.75 | 0.58 | 0.47 | 0.213 |
| 25 mm | 0.86 | 1.07 | 0.65 | 0.36 | 0.71 | 0.303 |

(continued)

| Reference Example 2 | | | | | | |
|---|---|---|---|---|---|---|
| | U | R | D | L | Wd | σ |
| T | 0.85 | | | | - | - |
| 9 mm | 0.84 | 0.82 | 0.75 | 0.73 | 0.11 | 0.053 |
| 17 mm | 0.73 | 0.80 | 0.63 | 0.53 | 0.27 | 0.118 |
| 25 mm | 0.62 | 0.73 | 0.53 | 0.36 | 0.37 | 0.156 |
| Reference Example 3 | | | | | | |
| | U | R | D | L | Wd | σ |
| T | 0.43 | | | | - | - |
| 9 mm | 0.46 | 0.47 | 0.32 | 0.38 | 0.15 | 0.071 |
| 17 mm | 0.76 | 0.56 | 0.35 | 0.40 | 0.41 | 0.185 |
| 25 mm | 0.71 | 0.65 | 0.34 | 0.45 | 0.37 | 0.172 |

From the difference Wd between a maximum value and a minimum value of the distance W, and the standard deviation σ of the distance W that had been calculated, whether or not Samples 1, 2 and Reference Examples 1 to 3 satisfy the conditions 1 and 2 was determined. In the present examples, it was assumed that the condition 1 was satisfied if the difference Wd between a maximum value and a minimum value of the distance W was 0.35 mm or less on all of the three circumferences (radii of 9 mm, 17 mm, and 25 mm). It was assumed that the condition 2 was satisfied if the standard deviation σ (STDEV.S) of the distance W was 0.15 or less on all of the three circumferences (radii of 9 mm, 17 mm, and 25 mm). Also, the in-plane distribution of the distance W was determined to have concentricity if at least one of the conditions 1 and 2 was satisfied.

Samples 1 and 2, which were produced by the production method described in the first embodiment, satisfied both the conditions 1 and 2. That is, for Samples 1 and 2, it was confirmed that the in-plane distribution of the distance W had concentricity. On the other hand, Reference Examples 1 to 3 satisfied neither the condition 1 nor 2. That is, for Reference Examples 1 to 3, it was confirmed that the in-plane distribution of the distance W did not have concentricity.

(3) Evaluation of Lens Thickness Reduction

Next, for Samples 1, 2 and Reference Examples 1 to 3, each of the eyeball-side surfaces 121 was polished until the polarized film 130 was exposed, thus forming a single focus lens having an outer diameter of 65 mm and S+7.00.

Sample 1 had a center thickness of 7.10 mm, and an edge thickness of 0.90 mm. Sample 2 had a center thickness of 7.50 mm, and an edge thickness of 0.90 mm. In the case of actually manufacturing a finished lens, polishing is stopped before the polarized film 130 is exposed. Accordingly, it was confirmed that a finished lens in which the minimum value of the edge thickness is controlled at 1 mm can be produced with Samples 1 and 2. Note that in the finished lens, the distance between the eyeball-side surface 121 and the polarized film 130 is preferably about 0.1 mm or more.

Reference Example 1 had a center thickness of 8.15 mm, and an edge thickness of 1.55 mm. Reference Example 2 had a center thickness of 7.81 mm, and an edge thickness of 1.21 mm. Reference Example 3 had a center thickness of 7.25 mm, and an edge thickness of 1.05 mm. In Reference Examples 1 to 3, the edge thickness exceeds 1 mm, and the polarized film 130 is exposed. Accordingly, it was confirmed that a finished lens in which the minimum value of the edge thickness is controlled at 1 mm cannot be produced.

From the foregoing, it was confirmed that Samples 1, 2, in each of which the in-plane distribution of the distance W has concentricity, can more successfully reduce the thickness of the lens as compared with Reference Examples 1 to 3, in each of which the in-plane distribution of the distance W does not have concentricity.

LIST OF REFERENCE NUMERALS

100    Polarized lens (lens) for spectacles

| 110 | First lens substrate |
| 111 | Object-side surface |
| 120 | Second lens substrate |
| 121 | Eyeball-side surface |
| 130 | Polarized film |
| 140 | First mold |
| 141 | Back surface |
| 150 | Second mold |
| 151 | Front surface |
| 160 | Adhesive |
| 170 | Adhesive tape |
| S101 | Polarized film molding step |
| S102 | Mold assembly step |
| S103 | Monomer injection step |
| S104 | Heating and curing step |
| S105 | Mold releasing step |

**Claims**

1. A polarized lens for spectacles, comprising:

   a first lens substrate having an object-side surface on which a convex surface that is a rotationally symmetric aspherical surface is formed;
   a second lens substrate having an eyeball-side surface; and
   a polarized film provided between the first lens substrate and the second lens substrate and having a convex shape toward the object-side surface,
   wherein an in-plane distribution of a distance W between the object-side surface and the polarized film has concentricity.

2. The polarized lens for spectacles according to claim 1,
   wherein the distance W on a circumference centered around an optical center of the object-side surface and including a position at which the distance W is minimum is 0.1 mm or more and 0.7 mm or less.

3. The polarized lens for spectacles according to claim 1 or 2,
   wherein a difference between a maximum value and a minimum value of the distance W on a circumference having a radius r (9 mm≤r≤25 mm) from an optical center of the object-side surface is 0.35 mm or less.

4. The polarized lens for spectacles according to any one of claims 1 to 3,
   wherein a standard deviation of the distance W at a plurality of points on a circumference having a radius r (9 mm ≤r≤25 mm) from an optical center of the object-side surface is 0.15 or less.

5. The polarized lens for spectacles according to any one of claims 1 to 4,
   wherein the polarized film has a radius of curvature different from that of the object-side surface.

6. The polarized lens for spectacles according to any one of claims 1 to 5,
   wherein a ratio of radial variation in the distance W is larger than a ratio of circumferential variation in the distance W on a plurality of circumferences having a radius r (9 mm ≤r≤25 mm) from an optical center of the object-side surface.

7. The polarized lens for spectacles according to any one of claims 1 to 6,
   wherein the convex shape of the polarized film is spherical.

8. The polarized lens for spectacles according to any one of claims 1 to 6,
   wherein the convex shape of the polarized film is rotationally symmetric aspherical.

9. The polarized lens for spectacles according to any one of claims 1 to 8,
   wherein the first lens substrate and the second lens substrate have a refractive index of 1.48 or more.

**10.** The polarized lens for spectacles according to any one of claims 1 to 9,
wherein the polarized film includes polyvinyl alcohol.

**11.** A method for manufacturing a polarized lens for spectacles including:

a first lens substrate having an object-side surface on which a convex surface that is a rotationally symmetric aspherical surface is formed;
a second lens substrate having an eyeball-side surface; and
a polarized film provided between the first lens substrate and the second lens substrate and having a convex shape toward the object-side surface,
the method comprising steps of:

preparing a first mold for forming the object-side surface, and a second mold for forming the eyeball-side surface;
fixing an outer peripheral portion of the first mold and an outer peripheral portion of the polarized film to each other at a predetermined interval from each other;
assembling the first mold and the second mold to each other to form a matrix; and
forming the lens substrate by injecting a material of a lens substrate into the matrix, and curing the material, wherein an in-plane distribution of a distance W between the polarized film and the object-side surface has concentricity.

**12.** The method for manufacturing a polarized lens for spectacles according to claim 11, further comprising a step of, after the step of forming the lens substrate,
subjecting the eyeball-side surface to polishing.

**13.** A method for manufacturing a framed spectacle, comprising steps of:

preparing a polarized lens for spectacles that is obtained by the manufacturing method according to claim 12; and
preparing a predetermined spectacle frame.

**14.** A method for inspecting a polarized lens for spectacles including:

a first lens substrate having an object-side surface on which a convex surface that is a rotationally symmetric aspherical surface is formed;
a second lens substrate having an eyeball-side surface; and
a polarized film provided between the first lens substrate and the second lens substrate and having a convex shape toward the object-side surface,
the method comprising
measuring a distance W between the object-side surface and the polarized film; and
evaluating the polarized lens for spectacles from an in-plane distribution of the distance W.

**FIG. 1A**

**FIG. 1B**

**FIG. 1C**

**FIG. 1D**

**FIG. 2**

```
                    ┌─────────┐
                    │  Start  │
                    └─────────┘
                         │
                         ▼
    ┌──────────────────────────────────────┐
    │    POLARIZED FILM MOLDING STEP        │──── S101
    └──────────────────────────────────────┘
                         │
                         ▼
    ┌──────────────────────────────────────┐
    │        MOLD ASSEMBLY STEP             │──── S102
    └──────────────────────────────────────┘
                         │
                         ▼
    ┌──────────────────────────────────────┐
    │      MONOMER INJECTION STEP           │──── S103
    └──────────────────────────────────────┘
                         │
                         ▼
    ┌──────────────────────────────────────┐
    │     HEATING AND CURING STEP           │──── S104
    └──────────────────────────────────────┘
                         │
                         ▼
    ┌──────────────────────────────────────┐
    │       MOLD RELEASING STEP             │──── S105
    └──────────────────────────────────────┘
                         │
                         ▼
                    ┌─────────┐
                    │   End   │
                    └─────────┘
```

**FIG. 3**

**FIG. 4**

<u>100</u>

# FIG. 5

Europäisches
Patentamt

European
Patent Office

Office européen
des brevets

# EUROPEAN SEARCH REPORT

**Application Number**

EP 22 16 0659

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 997 139 A (YASUDA SHINJI [JP]) 7 December 1999 (1999-12-07) * column 2, line 37 - column 7, line 32; figures 1-20 * | 1-4,9,10 | INV. B29D11/00 G02C7/10 G02C7/12 |
| X | US 2006/274259 A1 (POSIN THOMAS [US] ET AL) 7 December 2006 (2006-12-07) * paragraph [0013] - paragraph [0053]; figures 1-17 * | 1-4,9,10 | |
| X | WO 2020/262402 A1 (HOYA LENS THAILAND LTD [TH]; TAKADA KEISUKE [JP] ET AL.) 30 December 2020 (2020-12-30) * paragraph [0022] - paragraph [0025] * * paragraph [0029] * * paragraph [0054] - paragraph [0055] * * paragraph [0066] * * paragraph [0071] - paragraph [0085]; figures 1-8 * | 1,2,5-13 | |
| X | WO 2020/262400 A1 (HOYA LENS THAILAND LTD [TH]; TAKADA KEISUKE [JP] ET AL.) 30 December 2020 (2020-12-30) * paragraph [0019] - paragraph [0022] * * paragraph [0026] * * paragraph [0051] - paragraph [0052] * * paragraph [0064] * * paragraph [0070] - paragraph [0083]; figures 1-8 * | 1,2,6, 8-13 | TECHNICAL FIELDS SEARCHED (IPC) G02C G02B B29D |

-/--

The present search report has been drawn up for all claims

| Place of search | Date of completion of the search | Examiner |
|---|---|---|
| Munich | 21 June 2022 | Frisch, Anna Maria |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
................................................................
& : member of the same patent family, corresponding
document

EPO FORM 1503 03.82 (P04C01)

page 1 of 2

| | Europäisches Patentamt |
| --- | --- |
| | European Patent Office |
| | Office européen des brevets |

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | WO 2020/262399 A1 (HOYA LENS THAILAND LTD [TH]; TAKADA KEISUKE [JP] ET AL.) 30 December 2020 (2020-12-30) * paragraph [0022] - paragraph [0025] * * paragraph [0029] * * paragraph [0054] - paragraph [0055] * * paragraph [0066] * * paragraph [0071] - paragraph [0085]; figures 1-8 * ----- | 1,2,6, 8-13 | |
| Y | EP 2 796 907 A1 (HOYA LENS MFG PHILIPPINES INC [PH]) 29 October 2014 (2014-10-29) * paragraph [0171] - paragraph [0189]; figures 1-10; table 2 * ----- | 14 | |
| Y | US 2006/219347 A1 (BEGON CEDRIC [FR] ET AL) 5 October 2006 (2006-10-05) * paragraph [0189]; figure 5 * ----- | 14 | |
| | | | **TECHNICAL FIELDS SEARCHED (IPC)** |

The present search report has been drawn up for all claims

| Place of search | Date of completion of the search | Examiner |
| --- | --- | --- |
| Munich | 21 June 2022 | Frisch, Anna Maria |

EPO FORM 1503 03.82 (P04C01)

page 2 of 2

## ANNEX TO THE EUROPEAN SEARCH REPORT
## ON EUROPEAN PATENT APPLICATION NO.

EP 22 16 0659

This annex lists the patent family members relating to the patent documents cited in the above-mentioned European search report.
The members are as contained in the European Patent Office EDP file on
The European Patent Office is in no way liable for these particulars which are merely given for the purpose of information.

21-06-2022

| Patent document cited in search report | | Publication date | Patent family member(s) | | Publication date |
|---|---|---|---|---|---|
| US 5997139 | A | 07-12-1999 | DE | 69924080 T2 | 13-04-2006 |
| | | | EP | 1008891 A1 | 14-06-2000 |
| | | | JP | 3130510 B2 | 31-01-2001 |
| | | | JP | 2000171761 A | 23-06-2000 |
| | | | US | 5997139 A | 07-12-1999 |
| US 2006274259 | A1 | 07-12-2006 | NONE | | |
| WO 2020262402 | A1 | 30-12-2020 | EP | 3992696 A1 | 04-05-2022 |
| | | | JP | WO2020262402 A1 | 30-12-2020 |
| | | | US | 2021362446 A1 | 25-11-2021 |
| | | | WO | 2020262402 A1 | 30-12-2020 |
| WO 2020262400 | A1 | 30-12-2020 | EP | 3992697 A1 | 04-05-2022 |
| | | | JP | WO2020262400 A1 | 30-12-2020 |
| | | | US | 2021364684 A1 | 25-11-2021 |
| | | | WO | 2020262400 A1 | 30-12-2020 |
| WO 2020262399 | A1 | 30-12-2020 | EP | 3992698 A1 | 04-05-2022 |
| | | | JP | WO2020262399 A1 | 30-12-2020 |
| | | | US | 2021370625 A1 | 02-12-2021 |
| | | | WO | 2020262399 A1 | 30-12-2020 |
| EP 2796907 | A1 | 29-10-2014 | CN | 103930808 A | 16-07-2014 |
| | | | EP | 2796907 A1 | 29-10-2014 |
| | | | JP | 6316184 B2 | 25-04-2018 |
| | | | JP | WO2014021466 A1 | 21-07-2016 |
| | | | MX | 362399 B | 16-01-2019 |
| | | | US | 2014293217 A1 | 02-10-2014 |
| | | | WO | 2014021466 A1 | 06-02-2014 |
| US 2006219347 | A1 | 05-10-2006 | AT | 494133 T | 15-01-2011 |
| | | | AU | 2006232789 A1 | 12-10-2006 |
| | | | BR | PI0610523 A2 | 30-10-2012 |
| | | | CA | 2603227 A1 | 12-10-2006 |
| | | | CN | 101180177 A | 14-05-2008 |
| | | | EP | 1868798 A1 | 26-12-2007 |
| | | | JP | 2008536171 A | 04-09-2008 |
| | | | JP | 2012212176 A | 01-11-2012 |
| | | | PL | 1868798 T3 | 31-05-2011 |
| | | | US | 2006219347 A1 | 05-10-2006 |
| | | | US | 2007122547 A1 | 31-05-2007 |
| | | | US | 2011129599 A1 | 02-06-2011 |
| | | | WO | 2006105995 A1 | 12-10-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013160994 A